# EUROPÄISCHE PATENTANMELDUNG

(11) **EP 4 144 562 A1**
(43) Veröffentlichungstag der Anmeldung: **08.03.2023**
(21) Anmeldenummer: 22191463.3
(22) Anmeldetag: 22.08.2022
(51) Int. Cl.: B60L 3/00, B60L 58/18, H01M 10/44, G01R 31/382, H02J 7/00

(54) **ANORDNUNG MIT EINER BATTERIE UND VERFAHREN ZUM BETREIBEN EINER BATTERIE**

(30) Priorität: 01.09.2021 DE 102021209620
(71) Anmelder: Siemens Mobility GmbH, 81739 München (DE)
(72) Erfinder: Wolf, Matthias Fabian, 90403 Nürnberg (DE); Lingen, Christian, 91054 Erlangen (DE)
(74) Vertreter: Siemens Patent Attorneys

(57) **Zusammenfassung**

Die Erfindung bezieht sich unter anderem auf eine Anordnung mit einer Batterie (40). Erfindungsgemäß ist vorgesehen, dass die Anordnung einen Hilfsenergiespeicher (60) und eine Steuereinrichtung (100) aufweist, wobei die Steuereinrichtung (100) derart ausgestaltet ist, dass sie die Richtung des Batteriestroms (I1) überwacht und in Abhängigkeit von zumindest einem vorgegebenen Umschaltkriterium unter Einbezug des Hilfsenergiespeichers (60) in der Batterie (40) einen Gegenstrompuls (GP) auslöst, wenn das zumindest eine Umschaltkriterium erfüllt ist.

## Beschreibung

Im Bereich der Schienenfahrzeugtechnik ist es bekannt, Batterien vorzusehen, die sowohl zum Bereitstellen von Traktionsenergie für Antriebskomponenten der Schienenfahrzeuge als auch zum Speichern von Bremsenergie beim Bremsen der Schienenfahrzeuge dienen können.

Der Erfindung liegt die Aufgabe zugrunde, eine Anordnung mit einer Batterie anzugeben, die einen besonders energieeffizienten Betrieb ermöglicht.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Anordnung einen Hilfsenergiespeicher und eine Steuereinrichtung aufweist, wobei die Steuereinrichtung derart ausgestaltet ist, dass sie die Richtung des Batteriestromes überwacht und in Abhängigkeit von zumindest einem vorgegebenen Umschaltkriterium unter Einbezug des Hilfsenergiespeichers in der Batterie einen Gegenstrompuls auslöst, wenn das zumindest eine Umschaltkriterium erfüllt ist.

Batterien, insbesondere Lithium-Ionen-Batterien weisen - wie erfinderseitig als Problem erkannt wurde - die Eigenschaft auf, dass sich ihr Innenwiderstand erhöht, wenn die Batterien über einen längeren Zeitraum mit derselben Stromrichtung betrieben werden. Dies liegt daran, dass sich während des Stromflusses Kapazitäten in den Batteriezellen aufladen. An dieser Stelle setzt die Erfindung an, indem erfindungsgemäß ein Umschalten der Stromrichtung vorgesehen wird. Konkret sieht die erfindungsgemäße Anordnung vor, dass durch die Steuereinrichtung und den erfindungsgemäß vorgesehenen zusätzlichen Hilfsenergiespeicher eine Erzeugung von Gegenstrompulsen ausgelöst wird, wenn die Stromrichtung des Batteriestromes beim Betrieb der Batterie zumindest ein vorgegebenes Umschaltkriterium erreicht. Durch ein Erzeugen von Gegenstrompulsen durch Entnahme von Energie aus dem Hilfsenergiespeicher oder durch Aufnahme von Energie im Hilfsenergiespeicher kann in gezielter Form ein Stromrichtungswechsel des Batteriestromes hervorgerufen werden, wodurch eine zuvor hervorgerufene Erhöhung des Innenwiderstandes durch den "Gegenstrombetrieb" wieder rückgängig gemacht bzw. kompensiert werden kann. Mit anderen Worten kann also durch ein regelmäßiges Ändern der Stromrichtung des Batteriestromes sichergestellt werden, dass die oben angesprochene Erhöhung des Innenwiderstandes zumindest im zeitlichen Mittel kompensiert wird und der Innenwiderstand zumindest im zeitlichen Mittel eine geringere Höhe aufweist als dies der Fall wäre, wenn der Batteriestrom ungeregelt und ohne Kompensation von Gegenstrompulsen bliebe.

Als besonders vorteilhaft wird es angesehen, wenn das Umschaltkriterium oder zumindest eines der Umschaltkriterien eine Maximalzeitdauer definiert, für die der Batteriestrom durchgehend dieselbe Stromrichtung aufweisen darf, und die Steuereinrichtung derart ausgestaltet ist, dass sie den Gegenstrompuls erzeugt, sobald der Batteriestrom für die Maximalzeitdauer durchgehend dieselbe Stromrichtung aufweist. Bei der letztgenannten Ausgestaltung wird dem oben beschriebenen Effekt besonders effizient Rechnung getragen, dass bei einem Betrieb einer Batterie mit derselben Stromrichtung über einen langen Zeitraum eine signifikante Erhöhung des Innenwiderstands auftreten kann. Durch das vorgesehene Überwachen einer Maximalzeitdauer lässt sich erreichen, dass regelmäßig ein Umschalten des Batteriestromes und eine Rückführung bzw. Reduktion des Innenwiderstands erreicht wird, wenn Maximalzeitdauern überschritten werden.

Vorteilhaft ist es, wenn die Steuereinrichtung als Gegenstrompuls in der Batterie einen Ladepuls erzeugt, wenn während des Entladens der Batterie das Umschaltkriterium oder zumindest eines der Umschaltkriterien erfüllt wird, indem die Steuereinrichtung aus dem Hilfsenergiespeicher Ladestrom entnimmt und diesen als Gegenstrompuls in die Batterie einspeist.

Alternativ oder zusätzlich ist es vorteilhaft, wenn die Steuereinrichtung als Gegenstrompuls in der Batterie einen Entladepuls erzeugt, wenn während des Ladens der Batterie das Umschaltkriterium oder zumindest eines der Umschaltkriterien erfüllt wird, indem die Steuereinrichtung aus der Batterie einen den Gegenstrompuls bildenden Entladestrom entnimmt und diesen in den Hilfsenergiespeicher einspeist.

Die Anordnung weist vorzugsweise einen Gleichspannungszwischenkreis auf, an den eine elektrische Last, der Hilfsenergiespeicher und die Batterie angeschlossen sind.

Die Batterie ist vorzugsweise mittels eines ersten DC/DC-Wandlers an den Gleichspannungszwischenkreis angeschlossen.

Der Hilfsenergiespeicher ist vorzugsweise mittels eines zweiten DC/DC-Wandlers an den Gleichspannungszwischenkreis angeschlossen.

Die Steuereinrichtung ist vorzugsweise derart ausgestaltet, dass sie zum Erzeugen der Gegenstrompulse die gleichspannungszwischenkreisseitigen Ausgangsspannungen der DC/DC-Wandler oder zumindest eine von diesen verstellt.

Die Steuereinrichtung erzeugt vorzugsweise als Gegenstrompuls in der Batterie einen Ladepuls, wenn sie feststellt, dass während des Speisens der elektrischen Last mit einem Laststrom aus der Batterie das Umschaltkriterium oder zumindest eines der Umschaltkriterien erfüllt wird, wobei die Steuereinrichtung zur Erzeugung des Gegenstrompulses aus dem Hilfsenergiespeicher einen Ladestrom entnimmt und diesen als Gegenstrompuls in die Batterie einspeist sowie - zur weiteren Versorgung der elektrischen Last während des Erzeugens des Gegenstrompulses - den Laststrom für die Last aus dem Hilfsenergiespeicher entnimmt.

Für den letztgenannten Betrieb wird die Steuereinrichtung zur Erzeugung des Gegenstrompulses und zur weiteren Versorgung der elektrischen Last mit Laststrom die gleichspannungszwischenkreisseitige Ausgangsspannung des zweiten DC/DC-Wandlers vorzugsweise höher als die gleichspannungszwischenkreisseitige Ausgangsspannung des ersten DC/DC-Wandlers einstellen.

Die Steuereinrichtung erzeugt vorzugsweise als Gegenstrompuls in der Batterie einen Entladepuls, wenn sie feststellt, dass während des Ladens der Batterie das Umschaltkriterium oder zumindest eines der Umschaltkriterien erfüllt wird, indem sie Strom aus der Batterie entnimmt und diesen gemeinsam mit dem vorherigen Ladestrom in den Hilfsenergiespeicher einspeist. Für den letztgenannten Betrieb wird die Steuereinrichtung zur weiteren Versorgung der elektrischen Last mit Laststrom die gleichspannungszwischenkreisseitige Ausgangsspannung des zweiten DC/DC-Wandlers vorzugsweise kleiner als die gleichspannungszwischenkreisseitige Ausgangsspannung des ersten DC/DC-Wandlers einstellen.

Die Maximalzeitdauer beträgt bevorzugt zwischen 10 und 60 Sekunden.

Die Länge des Gegenstrompulses beträgt vorzugsweise zwischen 5 % und 15 % der Maximalzeitdauer.

Die Stromhöhe des in Laderichtung gerichteten Gegenstrompulses wird vorzugsweise derart gewählt bzw. wird von der Steuereinrichtung vorzugsweise derart eingestellt, dass sie zwischen 5 % und 15 % eines Ladestrommaximalwerts, der den maximalen erlaubten Ladestrom angibt, oder zwischen 5 % und 15 % des mittleren Entladestroms vor Erfüllung des Umschaltkriteriums liegt.

Die Stromhöhe des in Entladerichtung gerichteten Gegenstrompulses wird vorzugsweise derart gewählt bzw. wird von der Steuereinrichtung vorzugsweise derart eingestellt, dass sie zwischen 5 % und 15 % eines Entladestrommaximalwerts, der den maximalen erlaubten Entladestrom angibt, oder zwischen 5 % und 15 % des mittleren Ladestroms vor Erfüllung des Umschaltkriteriums liegt.

Die Erfindung bezieht sich darüber hinaus auf ein Fahrzeug, insbesondere Schienenfahrzeug. Erfindungsgemäß ist vorgesehen, dass das Fahrzeug mit einer Anordnung, wie sie oben beschrieben worden ist, ausgestattet ist.

Vorteilhaft ist es, wenn die Anordnung einen Gleichspannungszwischenkreis aufweist, an den als elektrische Last ein Antrieb des Fahrzeugs, der Hilfsenergiespeicher und die Batterie angeschlossen sind, wobei die Batterie eine Traktionsbatterie ist, die Fahrenergie zum Speisen des die elektrische Last bildenden Antriebs speichert.

Die Erfindung bezieht sich darüber hinaus auf ein Verfahren zum Betreiben einer Batterie. Erfindungsgemäß ist es bezüglich des Verfahrens vorgesehen, dass die Richtung des Batteriestromes überwacht wird und in Abhängigkeit von zumindest einem vorgegebenen Umschaltkriterium mittels eines Hilfsenergiespeichers in der Batterie ein Gegenstrompuls ausgelöst wird, wenn das Umschaltkriterium erfüllt ist.

Bezüglich der Vorteile und vorteilhafter Ausgestaltungen des erfindungsgemäßen Verfahrens sei auf die obigen Ausführungen im Zusammenhang mit der erfindungsgemäßen Anordnung sowie deren vorteilhafter Ausgestaltungen verwiesen.

Vorteilhaft ist es wenn als Gegenstrompuls in der Batterie ein Ladepuls erzeugt wird, wenn festgestellt wird, dass während des Speisens einer elektrischen Last mit einem Laststrom aus der Batterie das Umschaltkriterium oder zumindest eines der Umschaltkriterien erfüllt wird, wobei zur Erzeugung des Gegenstrompulses aus dem Hilfsenergiespeicher Ladestrom entnommen und dieser als Ladepuls in die Batterie eingespeist wird und zum Weiterbetreiben der elektrischen Last der Laststrom aus dem Hilfsenergiespeicher entnommen wird.

Die Erfindung wird nachfolgend anhand von Ausführungsbeispielen näher erläutert; dabei zeigen beispielhaft:
- Figur 1: ein Ausführungsbeispiel für ein Schienenfahrzeug, das mit einer Batterie, einer Hilfsenergieeinrichtung und einer Antriebskomponente ausgestattet ist,
- Figur 2: das Ausführungsbeispiel gemäß Figur 1, wobei die Antriebskomponente mit dem Batteriestrom der Batterie gespeist wird und die Hilfsenergieeinrichtung inaktiv ist,
- Figur 3: das Ausführungsbeispiel gemäß Figur 1, wobei die Antriebskomponente mit dem Strom der Hilfsenergieeinrichtung gespeist wird und in die Batterie ein Gegenstrompuls eingespeist wird,
- Figur 4: für das Ausführungsbeispiel gemäß Figur 1 im zeitlichen Verlauf beispielhaft einen Lastbetrieb, bei dem die Antriebskomponente zeitweise von der Batterie und zeitweise von der Hilfsenergieeinrichtung gespeist wird, und
- Figur 5: für das Ausführungsbeispiel gemäß Figur 1 im zeitlichen Verlauf beispielhaft einen Bremsbetrieb der Antriebskomponente, bei dem die zurückgespeiste Energie der Antriebskomponente zeitweise in die Batterie und zeitweise in die Hilfsenergieeinrichtung eingespeist wird.

In den Figuren werden der Übersicht halber für identische oder vergleichbare Komponenten dieselben Bezugszeichen verwendet.

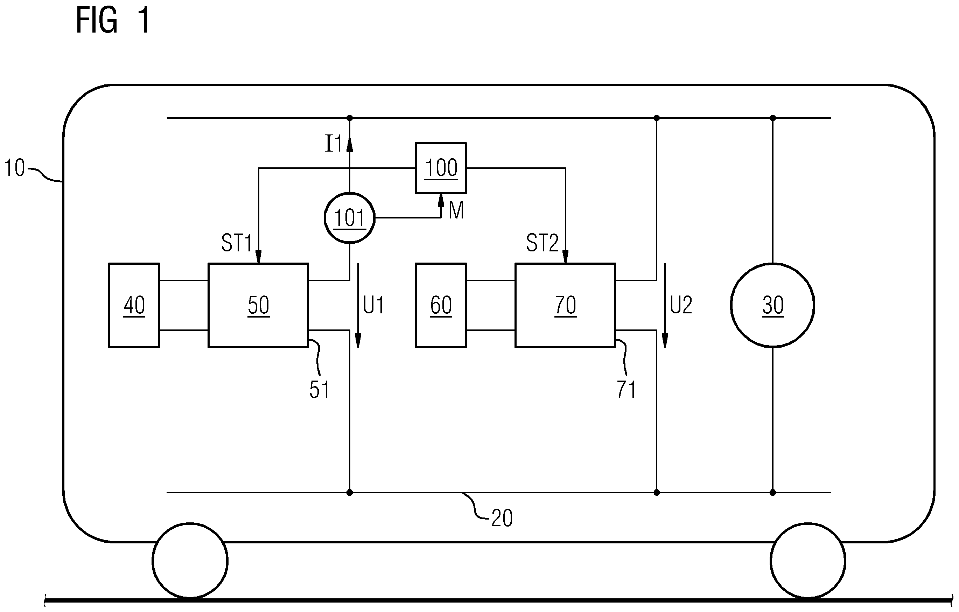

Die Figur 1 zeigt ein Ausführungsbeispiel für ein Schienenfahrzeug 10, das mit einem Gleichspannungszwischenkreis 20 ausgestattet ist. An den Gleichspannungszwischenkreis 20 ist eine elektrische Komponente 30 angeschlossen, bei der es sich beispielsweise um eine Antriebskomponente des Schienenfahrzeugs 10 handeln kann. Mit dem Gleichspannungszwischenkreis 20 steht darüber hinaus eine Batterie 40 in Verbindung, und zwar über einen zugeordneten ersten DC/DC-Wandler (DC/DC-Steller) 50. Die Batterie 40 kann beispielsweise einen Energieinhalt zwischen 500 - 700 kWh aufweisen und eine Lade-/Entladeleistung von bis zu 3 MW zur Verfügung stellen.

Darüber hinaus ist bei dem Schienenfahrzeug 10 ein Hilfsenergiespeicher 60 vorgesehen, der über einen zugeordneten zweiten DC/DC-Wandler (DC/DC-Steller) 70 ebenfalls an den Gleichspannungszwischenkreis 20 angeschlossen ist. Bei dem Hilfsenergiespeicher 60 kann es sich beispielsweise um eine zweite Batterie, einen Kondensator, Supercaps, einen Li-Ion Kondensator und/oder einen Schwungradspeicher handeln.

Die beiden DC/DC-Wandler 50 und 70 werden von einer Steuereinrichtung 100 angesteuert, die zu diesem Zweck ein erstes Steuersignal ST1 zur Ansteuerung des ersten DC/DC-Wandlers 50 und ein zweites Steuersignal ST2 zur Ansteuerung des zweiten DC/DC-Wandlers 70 erzeugt. Der Batteriestrom I1 der Batterie 40 wird von der Steuereinrichtung 100 beispielsweise mittels einer Strommesseinrichtung 101, die an der Ausgangsseite 51 des ersten DC/DC-Wandlers 50 angeschlossen ist, unter Bildung eines Strommesswerts M erfasst.

Mit den Steuersignalen ST1 und ST2 kann die Steuereinrichtung 100 beispielsweise bewirken, dass die Ausgangsspannung U1 auf der Ausgangsseite 51 des ersten DC/DC-Wandlers größer als die Ausgangsspannung U2 auf der Ausgangsseite 71 des zweiten DC/DC-Wandlers ist. Alternativ kann die Steuereinrichtung 100 mittels der Steuersignale ST1 und ST2 bewirken, dass die Ausgangsspannung U2 des zweiten DC/DC-Wandlers 70 höher als die Ausgangsspannung U1 des ersten DC/DC-Wandlers 50 ist.

Mit anderen Worten ist die Steuereinrichtung 100 also in der Lage, die Energieflussrichtung der Batterie 40 und die des Hilfsenergiespeichers 60 beliebig zu steuern.

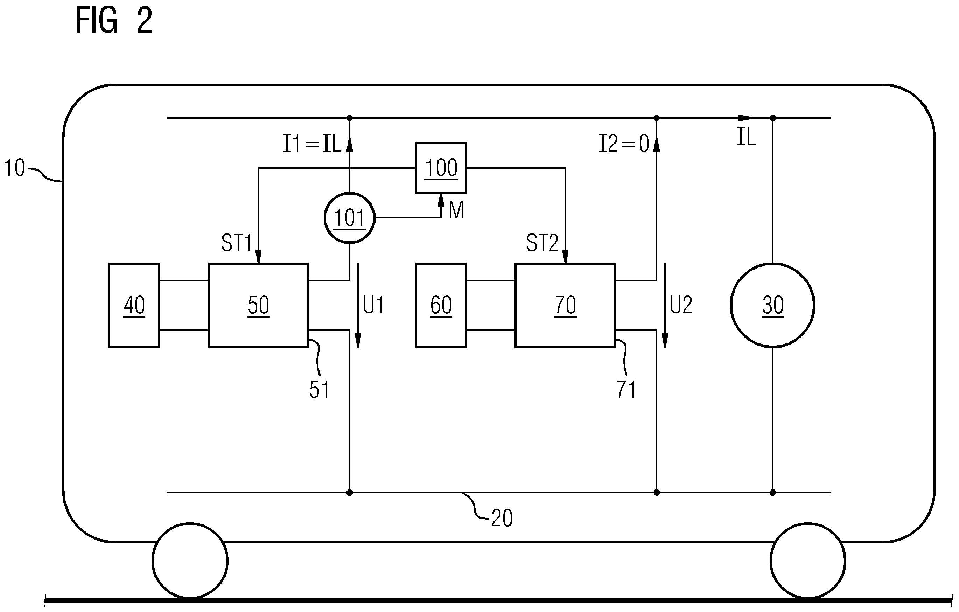

Die Figur 2 zeigt das Schienenfahrzeug 10 gemäß Figur 1 für den Fall, dass die elektrische Komponente 30 im Lastbetrieb betrieben wird. Ein Laststrom IL, der in die elektrische Komponente 30 hineinfließt, wird in der in der Figur 2 gezeigten Phase ausschließlich von der Batterie 40 bereitgestellt. Es entspricht hier also der Laststrom IL dem Batteriestrom I1 der Batterie 40. Auf der Ausgangsseite 71 des zweiten DC/DC-Wandlers 70 fließt kein Strom I2, sodass der Hilfsenergiespeicher 60 vom Gleichspannungszwischenkreis 20 strommäßig getrennt ist.

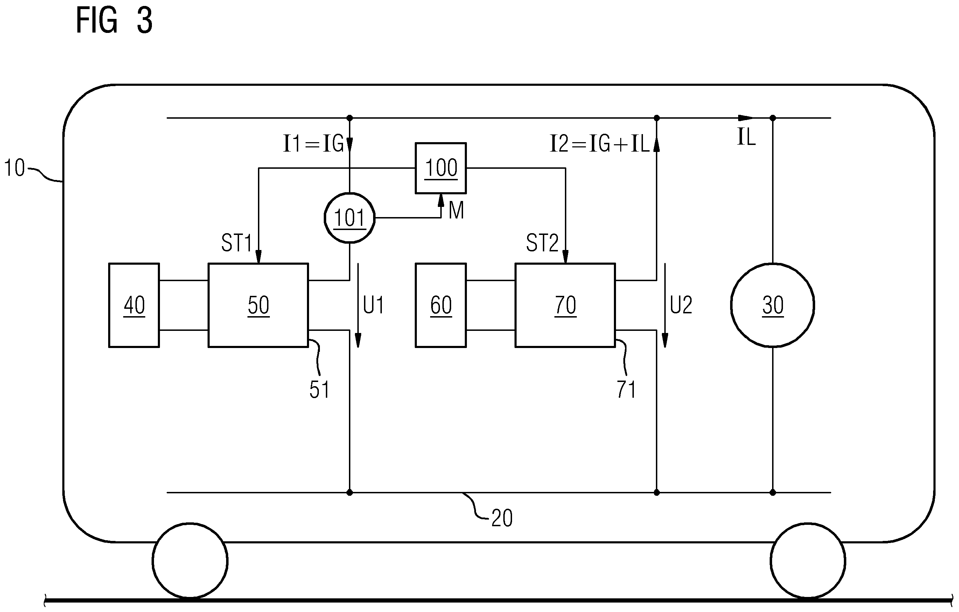

Stellt die Steuereinrichtung 100 fest, dass die Richtung des Batteriestromes I1 für eine vorgegebene Maximalzeitdauer Tmax dieselbe Stromrichtung aufweist, weil nämlich für die Maximalzeitdauer die elektrische Komponente 30 ausschließlich mit dem Batteriestrom I1 der Batterie 40 gespeist worden ist, so bewirkt sie durch eine entsprechende Einstellung der Steuersignale ST1 und ST2, dass in der Batterie 40 ein Gegenstrompuls erzeugt wird, wie dies beispielhaft in der Figur 3 gezeigt ist. Der Gegenstrompuls kann beispielsweise dadurch bewirkt werden, dass mit dem Steuersignal ST1 die Ausgangsspannung U1 des ersten DC/DC-Wandlers 50 reduziert und die Ausgangsspannung U2 des zweiten DC/DC-Wandlers 70 erhöht wird.

In der Figur 3 erkennt man, dass der in die elektrische Komponente 30 hineinfließende Laststrom IL nun von dem zweiten DC/DC-Wandler 70 bzw. dem Hilfsenergiespeicher 60 zur Verfügung gestellt wird. Darüber hinaus stellt der von dem Hilfsenergiespeicher 60 erzeugte Hilfsstrom I2 auch den Gegenstrompuls zur Verfügung, dessen Höhe in der Figur 3 mit dem Bezugszeichen IG gekennzeichnet ist.

Die Höhe IG der in Laderichtung gerichteten Gegenstrompulse beträgt vorzugsweise zwischen 5 % und 15 % eines Ladestrommaximalwerts, der den maximalen erlaubten Ladestrom der Batterie 40 angibt, oder zwischen 5 % und 15 % des mittleren Entladestroms vor Erfüllung des Umschaltkriteriums.

Die Zeitdauer des Gegenstrompulses ist bezogen auf die Maximalzeitdauer Tmax relativ klein und liegt vorzugsweise in einem Bereich zwischen 5 % und 15 % der Maximalzeitdauer Tmax.

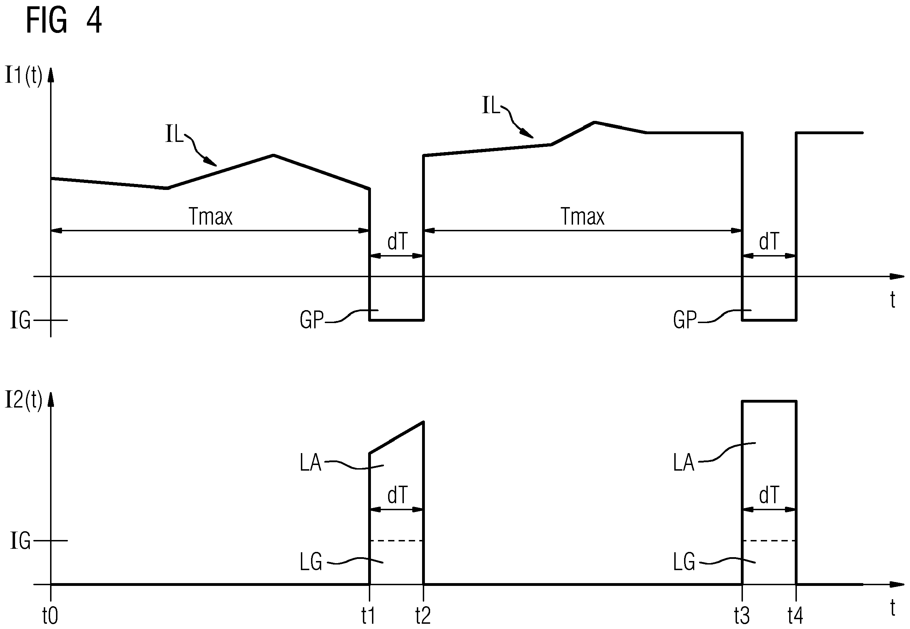

Die Figur 4 zeigt beispielhaft die zeitlichen Verläufe des Batteriestroms I1 und des Hilfsstromes I2 über der Zeit t im normalen Lastbetrieb. Es lässt sich im oberen Abschnitt der Figur 4 erkennen, dass der Batteriestrom I1 während der Zeitphase zwischen den Zeitpunkten t0 und t1 sowie während der Zeitphase zwischen den Zeitpunkten t2 und t3 jeweils den Laststrom IL für die elektrische Komponente 30 gemäß den Figuren 1 und 2 zur Verfügung stellt.

Sobald die vorgegebene Maximalzeitdauer Tmax abgelaufen ist, wird von der Steuereinrichtung 100 der Gegenstrompuls GP ausgelöst, und zwar für eine Pulszeitdauer dT. Die Höhe des Stromes während der Gegenstrompulsphase ist wieder mit dem Bezugszeichen IG gekennzeichnet.

Der Gegenstrompuls GP wird von dem Hilfsenergiespeicher 60 bzw. dem diesem zugeordneten zweiten DC/DC-Wandler 70 zur Verfügung gestellt, wie der Verlauf des Hilfsstromes I2 über der Zeit t im unteren Abschnitt der Figur 4 zeigt. So lässt sich erkennen, dass in den Zeitintervallen zwischen t1 und t2 sowie zwischen t3 und t4 vom Hilfsenergiespeicher 60 jeweils ein Hilfsstrom I2 erzeugt wird, dessen Lastanteil LA den Laststrom IL für die elektrische Komponente 30 zur Verfügung stellt und dessen Gegenpulsanteil LG den Gegenstrompuls GP für die Batterie 40 bereitstellt.

Zusammengefasst besteht die Funktion des Hilfsenergiespeichers 60 also darin, immer dann, wenn der Batteriestrom I1 zu lange dieselbe Richtung aufweist, einen Gegenstrompuls GP zu erzeugen. Die Funktion der Gegenstrompulse GP besteht darin, den Innenwiderstand der Batterie 40 zu reduzieren; denn ein Batteriestrom I1 mit konstanter Stromrichtung führt über der Zeit zu einer Erhöhung des Innenwiderstandes der Batterie 40, die die elektrischen Verluste der Batterie 40 erhöht und somit unerwünscht ist. Durch die regelmäßige Erzeugung von Gegenstrompulsen GP lässt sich also im zeitlichen Mittel der Innenwiderstand der Batterie 40 reduzieren bzw. reduziert halten, sodass der Gesamtbetrieb der Batterie 40 energieeffizienter ist als wenn auf die Gegenstrompulse GP verzichtet werden würde.

In der Figur 4 ist aus Gründen der Übersicht nicht dargestellt, dass der Hilfsenergiespeicher 60 gelegentlich Energie aus dem Gleichspannungszwischenkreis 20 aufnehmen muss, um seinen Ladezustand zu erhalten, da er andernfalls aufgrund der regelmäßigen Erzeugung der Gegenstrompulse GP womöglich einen zu niedrigen Ladezustand erreichen würde.

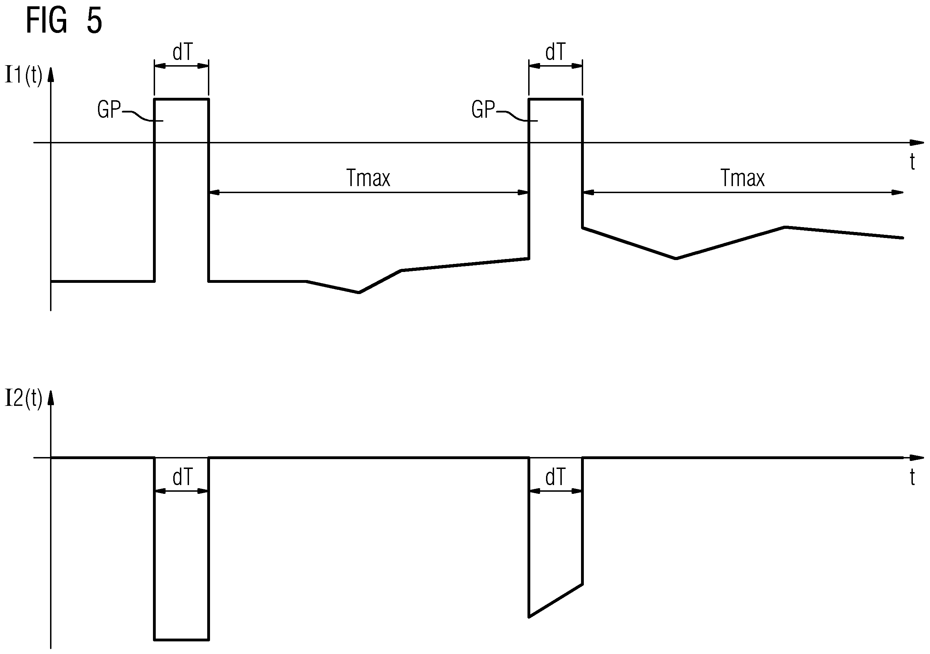

Die Erzeugung der Gegenstrompulse GP ist im Zusammenhang mit den Figuren 2 bis 4 für einen Lastbetrieb der elektrischen Komponente 30 dargestellt. Handelt es sich bei der elektrischen Komponente 30 um eine Antriebskomponente, so kann diese im Falle eines Bremsbetriebs auch Ladestrom zum Laden der Batterie 40 zur Verfügung stellen. Im Falle eines Ladebetriebs der Batterie 40 gelten die obigen Ausführungen im Zusammenhang mit der Erzeugung von Gegenstrompulsen GP analog. So wird im Falle eines Ladebetriebs der Batterie 40 - wie die Figur 5 beispielhaft zeigt - immer dann ein Gegenstrompuls GP (als Entladestrompuls) von dem Hilfsenergiespeicher 60 erzeugt, wenn die Richtung des Batteriestromes I1 im Ladebetrieb für die Maximalzeitdauer Tmax konstant geblieben ist. Wird die Maximalzeitdauer Tmax erreicht, so wird das Laden der Batterie 40 unterbrochen und ein Endladestrom aus der Batterie 40 als Gegenstrompuls GP entnommen. Der Gegenstrompuls GP kann beispielsweise dadurch bewirkt werden, dass mit dem Steuersignal ST1 die Ausgangsspannung U1 des ersten DC/DC-Wandlers 50 erhöht und die Ausgangsspannung U2 des zweiten DC/DC-Wandlers 70 reduziert wird.

Da in den Phasen, in denen der Hilfsenergiespeicher 60 die Gegenstrompulse GP erzeugt, die Batterie 40 die Bremsenergie der elektrischen Komponente 30 nicht aufnehmen kann, wird diese im Hilfsenergiespeicher 60 untergebracht, sodass sich der Hilfsstrom I2, der in den Hilfsenergiespeicher 60 hineinfließt, zusammensetzt aus einem Speiseanteil, der von der Batterie 40 bereitgestellt wird, sowie einem anderen Speiseanteil, der von der elektrischen Komponente 30 zur Verfügung gestellt wird.

Die Höhe IG der in Entladerichtung gerichteten Gegenstrompulse GP beträgt vorzugsweise zwischen 5 % und 15 % eines Entladestrommaximalwerts, der den maximalen erlaubten Entladestrom der Batterie 40 angibt, oder zwischen 5 % und 15 % des mittleren Ladestroms vor Erfüllung des Umschaltkriteriums.

Im Übrigen gelten die obigen Ausführungen im Zusammenhang mit den Figuren 1 bis 4 und dem Entladen der Batterie 40 für den Ladebetrieb gemäß Figur 5 in analoger Form bzw. entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 20: Gleichspannungszwischenkreis
- 30: elektrische Komponente / Last
- 40: Batterie
- 50: DC/DC-Wandler / DC/DC-Steller
- 51: Ausgangsseite
- 60: Hilfsenergiespeicher
- 70: DC/DC-Wandler / DC/DC-Steller
- 71: Ausgangsseite
- 100: Steuereinrichtung
- 101: Strommesseinrichtung

- dT: Pulszeitdauer
- GP: Gegenstrompuls
- I1: Batteriestrom
- I2: Hilfsstrom
- IG: Gegenstrompuls
- IL: Laststrom
- LA: Lastanteil
- LG: Gegenpulsanteil

- M: Strommesswert
- ST1: Steuersignal
- ST2: Steuersignal
- t: Zeit
- t0: Zeitpunkt
- t1: Zeitpunkt
- t2: Zeitpunkt
- t3: Zeitpunkt
- t4: Zeitpunkt
- Tmax: Maximalzeitdauer
- U1: Ausgangsspannung
- U2: Ausgangsspannung

## Patentansprüche

1. Anordnung mit einer Batterie (40),
**dadurch gekennzeichnet, dass**
- die Anordnung einen Hilfsenergiespeicher (60) und eine Steuereinrichtung (100) aufweist,
- wobei die Steuereinrichtung (100) derart ausgestaltet ist, dass sie die Richtung des Batteriestromes (I1) überwacht und in Abhängigkeit von zumindest einem vorgegebenen Umschaltkriterium unter Einbezug des Hilfsenergiespeichers (60) in der Batterie (40) einen Gegenstrompuls (GP) auslöst, wenn das zumindest eine Umschaltkriterium erfüllt ist.

2. Anordnung nach Anspruch 1,
**dadurch gekennzeichnet, dass**
- das Umschaltkriterium oder zumindest eines der Umschaltkriterien eine Maximalzeitdauer (Tmax) definiert, für die der Batteriestrom (I1) durchgehend dieselbe Stromrichtung aufweisen darf, und
- die Steuereinrichtung (100) derart ausgestaltet ist, dass sie den Gegenstrompuls (GP) erzeugt, sobald der Batteriestrom (I1) für die Maximalzeitdauer (Tmax) durchgehend dieselbe Stromrichtung aufweist.

3. Anordnung nach einem der voranstehenden Ansprüche,
**dadurch gekennzeichnet, dass**
die Steuereinrichtung (100) als Gegenstrompuls (GP) in der Batterie (40) einen Ladepuls erzeugt, wenn während des Entladens der Batterie (40) das Umschaltkriterium oder zumindest eines der Umschaltkriterien erfüllt wird, indem die Steuereinrichtung (100) aus dem Hilfsenergiespeicher (60) Ladestrom entnimmt und diesen als Gegenstrompuls (GP) in die Batterie (40) einspeist.

4. Anordnung nach einem der voranstehenden Ansprüche,
**dadurch gekennzeichnet, dass**
die Steuereinrichtung (100) als Gegenstrompuls (GP) in der Batterie (40) einen Entladepuls erzeugt, wenn während des Ladens der Batterie (40) das Umschaltkriterium oder zumindest eines der Umschaltkriterien erfüllt wird, indem die Steuereinrichtung (100) aus der Batterie (40) einen den Gegenstrompuls (GP) bildenden Entladestrom entnimmt und diesen in den Hilfsenergiespeicher (60) einspeist.

5. Anordnung nach einem der voranstehenden Ansprüche,
**dadurch gekennzeichnet, dass**
- die Batterie (40) mittels eines ersten DC/DC-Wandlers (50) an einen Gleichspannungszwischenkreis (20) angeschlossen ist,
- der Hilfsenergiespeicher (60) mittels eines zweiten DC/DC-Wandlers (70) an den Gleichspannungszwischenkreis (20) angeschlossen ist und
- die Steuereinrichtung (100) derart ausgestaltet ist, dass sie zum Erzeugen der Gegenstrompulse die gleichspannungszwischenkreisseitigen Ausgangsspannungen (U1, U2) der DC/DC-Wandler (50, 70) oder zumindest eine von diesen verstellt.

6. Anordnung nach einem der voranstehenden Ansprüche,
**dadurch gekennzeichnet, dass**
- die Anordnung einen Gleichspannungszwischenkreis (20) aufweist, an den eine elektrische Last (30), der Hilfsenergiespeicher (60) und die Batterie (40) angeschlossen sind,
- wobei die Steuereinrichtung (100) als Gegenstrompuls (GP) in der Batterie (40) einen Ladepuls erzeugt, wenn sie feststellt, dass während des Speisens der elektrischen Last (30) mit einem Laststrom (IL) aus der Batterie (40) das Umschaltkriterium oder zumindest eines der Umschaltkriterien erfüllt wird,
- wobei die Steuereinrichtung (100) zur Erzeugung des Gegenstrompulses (GP) aus dem Hilfsenergiespeicher (60) einen Ladestrom entnimmt und diesen als Gegenstrompuls (GP) in die Batterie (40) einspeist sowie - zur weiteren Versorgung der elektrischen Last (30) während des Erzeugens des Gegenstrompulses (GP) - den Laststrom (IL) für die Last (30) aus dem Hilfsenergiespeicher (60) entnimmt.

7. Anordnung nach Anspruch 6,
**dadurch gekennzeichnet, dass**
die Steuereinrichtung (100) zur Erzeugung des Gegenstrompulses (GP) und zur weiteren Versorgung der elektrischen Last (30) mit Laststrom (IL) die gleichspannungszwischenkreisseitige Ausgangsspannung (U2) des zweiten DC/DC-Wandlers (70) höher als die gleichspannungszwischenkreisseitige Ausgangsspannung (U1) des ersten DC/DC-Wandlers (50) einstellt.

8. Anordnung nach einem der voranstehenden Ansprüche,
**dadurch gekennzeichnet, dass**
die Maximalzeitdauer (Tmax) zwischen 10 und 60 Sekunden beträgt.

9. Anordnung nach einem der voranstehenden Ansprüche,
**dadurch gekennzeichnet, dass**
die Länge des Gegenstrompulses (GP) zwischen 5 % und 15 % der Maximalzeitdauer (Tmax) beträgt.

10. Anordnung nach einem der voranstehenden Ansprüche,
**dadurch gekennzeichnet, dass**
die Stromhöhe des in Laderichtung gerichteten Gegenstrompulses (GP)
- zwischen 5 % und 15 % eines Ladestrommaximalwerts, der den maximalen erlaubten Ladestrom angibt, oder
- zwischen 5 % und 15 % des mittleren Entladestroms vor Erfüllung des Umschaltkriteriums
beträgt.

11. Anordnung nach einem der voranstehenden Ansprüche,
**dadurch gekennzeichnet, dass**
die Stromhöhe des in Entladerichtung gerichteten Gegenstrompulses (GP)
- zwischen 5 % und 15 % eines Entladestrommaximalwerts, der den maximalen erlaubten Entladestrom angibt, oder
- zwischen 5 % und 15 % des mittleren Ladestroms vor Erfüllung des Umschaltkriteriums
beträgt.

12. Fahrzeug (10), insbesondere Schienenfahrzeug,
**dadurch gekennzeichnet, dass**
das Fahrzeug mit einer Anordnung nach einem der voranstehenden Ansprüche ausgestattet ist.

13. Fahrzeug (10)nach Anspruch 12,
**dadurch gekennzeichnet, dass**
- die Anordnung einen Gleichspannungszwischenkreis (20) aufweist, an den als elektrische Last (30) ein Antrieb des Fahrzeugs, der Hilfsenergiespeicher (60) und die Batterie (40) angeschlossen sind,
- wobei die Batterie (40) eine Traktionsbatterie ist, die Fahrenergie zum Speisen des die elektrische Last (30) bildenden Antriebs speichert.

14. Verfahren zum Betreiben einer Batterie (40),
**dadurch gekennzeichnet, dass**
- die Richtung des Batteriestromes (I1) überwacht wird und
- in Abhängigkeit von zumindest einem vorgegebenen Umschaltkriterium mittels eines Hilfsenergiespeichers (60) in der Batterie (40) ein Gegenstrompuls (GP) ausgelöst wird, wenn das Umschaltkriterium erfüllt ist.

15. Verfahren nach Anspruch 14,
**dadurch gekennzeichnet, dass**
- als Gegenstrompuls (GP) in der Batterie (40) ein Ladepuls erzeugt wird, wenn festgestellt wird, dass während des Speisens einer elektrischen Last (30) mit einem Laststrom (IL) aus der Batterie (40) das Umschaltkriterium oder zumindest eines der Umschaltkriterien erfüllt wird,
- wobei zur Erzeugung des Gegenstrompulses (GP) aus dem Hilfsenergiespeicher (60) Ladestrom entnommen und dieser als Ladepuls in die Batterie (40) eingespeist wird und zum Weiterbetreiben der elektrischen Last (30) der Laststrom (IL) aus dem Hilfsenergiespeicher (60) entnommen wird.
